**Europäisches Patentamt**

**European Patent Office**

**Office européen des brevets**

(19)

(11) Veröffentlichungsnummer : **0 074 028**
**B1**

(12) **EUROPÄISCHE PATENTSCHRIFT**

(45) Veröffentlichungstag der Patentschrift :
21.11.85

(51) Int. Cl.⁴ : **E 04 B   1/78, E 06 B   9/24,**
**E 04 H  15/54, B 32 B 15/14,**
**E 04 B   1/74**

(21) Anmeldenummer : 82107850.8

(22) Anmeldetag : 26.08.82

(54) IR-reflektierende, flexible Materialbahn.

(30) Priorität : 05.09.81 DE 3135271

(43) Veröffentlichungstag der Anmeldung :
16.03.83 Patentblatt 83/11

(45) Bekanntmachung des Hinweises auf die Patenterteilung : 21.11.85 Patentblatt 85/47

(84) Benannte Vertragsstaaten :
AT BE CH DE FR GB IT LI LU NL SE

(56) Entgegenhaltungen :
EP-A- 0 020 901
EP-A- 0 025 197
FR-A- 2 413 971
US-A- 1 983 617
US-A- 3 707 433

(73) Patentinhaber : Pusch, Günter, Dr.-Ing.
Bannholzweg 12
D-6903 Neckargemünd (DE)

(72) Erfinder : Aisslinger, Dieter E.
Heidestrasse 54
D-6222 Geisenheim (DE)
Erfinder : Weimar, Reinhold, Prof. Dr.-Ing.
Eichendorfstrasse 11
D-4772 Bad Sassendorf (DE)
Erfinder : Pusch, Günter, Dr.-Ing.
Bannholzweg 12
D-6908 Neckargemünd 2 (DE)

(74) Vertreter : Paul, Dieter-Alfred, Dipl.-Ing.
Erftstrasse 82
D-4040 Neuss 1 (DE)

## Beschreibung

Die Erfindung betrifft eine IR-reflektierende, flexible Materialbahn beispielsweise für Abdeck-, Tarn- und Abschattungsplanen sowie Zelte oder dergleichen, die auf beiden Seiten mit einer auf einer Trägerbahn aufgebrachten, IR-reflektierenden Metallbeschichtung versehen ist, die jeweils mit einer weitgehend IR-durchlässigen Schutzbeschichtung abgedeckt sind.

Derartige Materialbahnen sind für die Herstellung von Isolierrollos oder dergleichen sowie von Tarnnetzen bekannt (siehe EP-A-0 025 197). Sie zeichnen sich durch hohe Wärmereflektion aus, weil die Schutzschichten IR-durchlässig ausgebildet sind und somit die Wärmestrahlung an den Metallbeschichtungen zurückgeworfen wird. Dabei ist von besonderem Vorzug, daß diese Materialbahnen auch farblich gestaltet werden können, ohne daß hierdurch die Wärmereflektionseigenschaften wesentlich beeinträchtigt werden.

Für zahlreiche Anwendungszwecke ist neben einer guten Wärmereflektionswirkung auch Wasserdampfdurchlässigkeit erwünscht. Dies gilt insbesondere für den Baubereich, für Abdeckungen und Verpackungen. Bisher ist es jedoch nicht gelungen, beide Eigenschaften derart zu kombinieren, daß sowohl eine sehr hohe Wärmereflektion als auch die notwendige Wasserdampfdurchlässigkeit gegeben ist.

Der Erfindung liegt somit die Aufgabe zugrunde, eine Materialbahn der eingangs genannten Art so auszubilden, daß sie wasserdampfdurchlässig ist, wobei die Wärmereflektionseigenschaften nicht beeinträchtigt werden sollen.

Diese Aufgabe wird erfindungsgemäß dadurch gelöst, daß ein Trägernetz vorgesehen wird, auf dessen beide Seiten je eine Trägerbahn mit außenseitiger Metall- und Schutzbeschichtung fixiert ist, wobei die Trägerbahnen sowie die Metall- und Schutzbeschichtungen für molekularen Wasserdampf im wesentlichen durchlässig ausgebildet sind.

Erfindungsgemäß wird die gestellte Aufgabe durch einen dreilagigen Aufbau der Materialbahn gelöst. Hierdurch läßt sich eine klare Aufgabenteilung mit der Möglichkeit, die beiden geforderten Eigenschaften in optimaler Weise zu verwirklichen, erzielen. So hat das Trägernetz im wesentlichen allein die Aufgabe, die mechanischen Beanspruchungen, insbesondere Zugbelastungen, aufzunehmen. Dabei behindert es wegen seiner netzförmigen Struktur die Wasserdampfdurchlässigkeit praktisch nicht. Da die Trägerbahnen auf diese Weise von mechanischen Beanspruchungen entlastet sind, fällt Ihnen nur noch die Aufgabe zu, einen Untergrund für die wärmereflektierende Metallbeschichtung zu bilden. Sie können deshalb so dünn ausgebildet werden, daß eine hohe Wasserdampfdurchlässigkeit erreicht wird. Aufgrund des erfindungsgemäßen dreilagigen Aufbaus ist damit erstmals eine Materialbahn geschaffen, die sich überall dort einsetzen läßt, wo gleichzeitig optimaler Wärmestrahlungsschutz und Wasserdampfdurchlässigkeit gefordert ist. Dabei kann die Materialbahn in weiten Grenzen den zu erwartenden mechanischen Beanspruchungen angepaßt werden, was nicht zuletzt auch den Bedampfungsvorgang für die Bildung der Metallbeschichtung erleichtert.

In Ausbildung der Erfindung ist vorgesehen, daß das Trägernetz ein grobes Gewebe, vorzugsweise ein Gittergewebe ist. Bei einem solchen Gittergewebe verlaufen die Längs- und Querfäden im Abstand zueinander und lassen hierdurch Zwischenräume frei, die für Wasserdampf durchlässig sind.

Billiger als ein Gittergewebe ist die Verwendung eines Gittergeleges, bei dem die Querfäden über die Längsfäden gelegt und an den Kreuzungsstellen verklebt werden. Die Herstellung dieses Gittergeleges ist erheblich wirtschaftlicher.

In weiterer Ausbildung der Erfindung ist vorgesehen, daß das Tragnetz aus monofilen Fäden besteht, die an den Kreuzungspunkten miteinander verklebt oder verschweißt sind. Die Stärke dieser Fäden kann den zu erwartenden Beanspruchungen angepaßt werden. Das gleiche gilt auch für die Zwischenräume zwischen den einzelnen Fäden.

Die Trägerbahnen können je nach Einsatzzweck aus Papier, Kunststoffolie, Textilgewebe, Faservlies oder anderen Flächengebilden bestehen. Insbesondere Faservliese eignen sich für den Zweck sehr gut, da sie sehr wasserdampfdurchlässig sind und sehr dünn hergestellt werden können, dabei jedoch noch eine ausreichende Festigkeit aufweisen.

Die Fixierung der Trägerbahnen an dem Trägernetz geschieht zweckmäßigerweise durch Verklebung. Dabei bieten sich zwei Arten der Verklebung an. Bei der einen Verklebungsart werden die Trägerbahnen lediglich an dem Trägernetz angeklebt, was verfahrensmäßig dadurch geschehen kann, daß das Trägernetz im Durchlaufverfahren mit Klebstoff versehen wird und dann die Trägerbahnen auf das Trägernetz aufgedrückt werden. Bei der anderen Verklebungsart wird eine Trägerbahn innenseitig mit Klebstoff partiell versehen und dann zunächst das Trägernetz und dann die andere Trägerbahn aufgelegt und miteinander verpreßt. Auch dies kann im Durchlaufverfahren zwischen Preßrollen geschehen.

Schließlich sieht die Erfindung vor, daß Trägerbahn und Trägernetz aus schwer entflammbarem bzw. nicht brennbarem Material bestehen, da diese Forderung insbesondere im Baubereich gestellt wird.

In der Zeichnung ist die Erfindung an Hand eines Ausführungsbeispieles näher veranschaulicht. Es zeigen :

Figur 1 einen Querschnitt durch eine Materialbahn entlang der Ebene A-B in Figur 2 ;

Figur 2 eine Draufsicht auf die Materialbahn gemäß Figur 1 nach Abheben der oberen Trägerbahn.

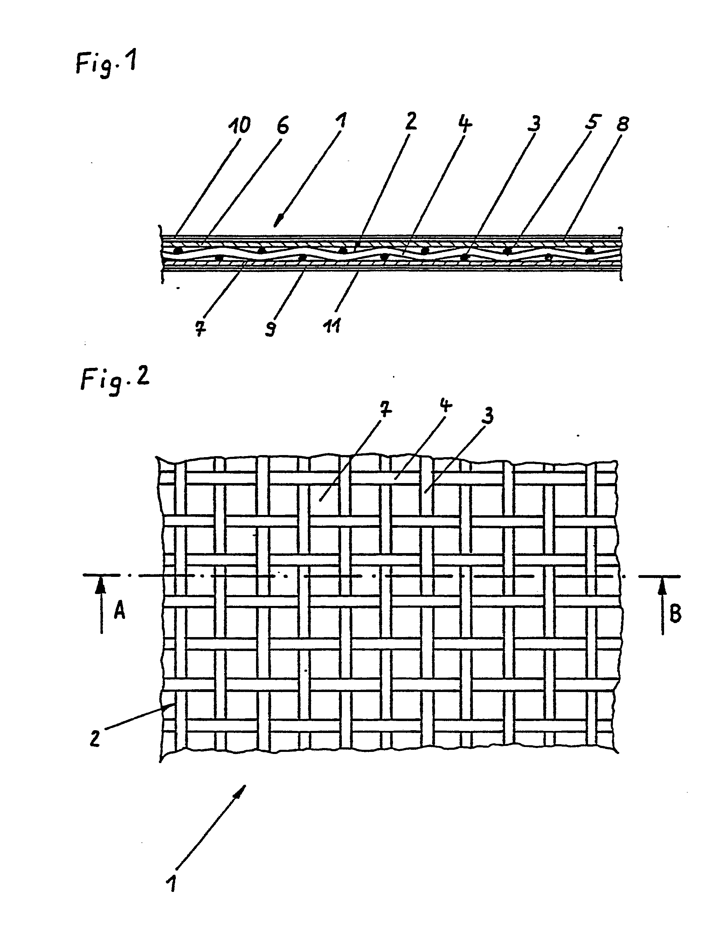

Die im Querschnitt in Figur 1 gezeigte Materialbahn 1 hat einen im wesentlichen dreilagigen Aufbau. Die mittlere Lage besteht aus einem Gittergewebe 2 mit monofilen Längs- und Querfäden 3, 4 aus einem geeigneten Kunststoff. An den Kreuzungspunkten 5 sind die Fäden 3, 4 miteinander verklebt. Aufgrund der Abstände zwischen den Fäden 3, 4 behindern sie kaum die Wasserdampfdurchlässigkeit. Ihre Festigkeit ist so bemessen, daß sie den zu erwartenden mechanischen Beanspruchungen, insbesondere Zugbeanspruchungen, gewachsen sind.

Auf das Gittergewebe 2 sind beidseitig Faservliesbahnen 6, 7 aufgeklebt. Je nach Erfordernis kann auch anderes Material, beispielsweise textiles Gewebe, Papier oder Folie, zum Einsatz kommen. Die Faservliesbahnen 6, 7 sind relativ dünn ausgebildet, da sie durch das Gittergewebe 2 von mechanischen Beanspruchungen entlastet sind. Ihre Dicke ist entsprechend dem Ziel, eine möglichst weitgehende Wasserdampfdurchlässigkeit zu erzielen, ansonsten jedoch wasserdicht zu sein, ausgelegt.

Die Faservliesbahnen 6, 7 bilden Unterlagen für außenseitig aufgebrachte Metallbeschichtungen 8, 9, die im Vakuum aufgedampft worden sind. Um sie vor Korrosion und mechanischen Beschädigungen zu schützen, sind Schutzschichten 10, 11 aufgebracht. Diese Schutzschichten 10, 11 bestehen aus einem infrarotdurchlässigen Material, beispielsweise speziell formuliertem Polyäthylen oder isomerisiertem Kautschuk. Sie sind dabei so dünn ausgebildet, daß sie IR-Strahlung praktisch kaum absorbieren und gleichzeitig auch für molekularen Wasserdampf durchlässig sind. Aufgrunddessen werden die IR-Strahlen von der Metallbeschichtung zu einem hohen Prozentsatz reflektiert, so daß die Materialbahn 1 gegenüber Strahlungswärme beidseitig praktisch wärmedicht ist. In die Schutzschichten 10, 11 können auch Farbpartikel eingelagert sein, um die Metallbeschichtungen 8, 9 abzudecken und der Materialbahn 1 ein gewünschtes, farbiges Aussehen zu geben oder eine nicht erwünschte Reflexion im sichtbaren Spektralbereich zu vermeiden. Dies geschieht in ansich bei Isolierrollos bekannter Weise so, daß auch durch die Einlagerung der Farbpartikel die IR-Durchlässigkeit im wesentlichen erhalten bleibt, die Wärmereflektionseigenschaften der Materialbahn 1 also nicht beeinträchtigt wird.

Figur 2 zeigt eine Draufsicht auf die Materialbahn 1, wobei jedoch die obere Faservliesbahn 6 abgehoben ist. Auf diese Weise ist die Gestaltung des Gittergewebes 2 mit seinen Längs- und Querfäden 3, 4 gut zu erkennen. Statt des Gittergewebes 2 kann auch ein Gittergelege zur Anwendung kommen.

**Patentansprüche**

1. IR-reflektierende, flexible Materialbahn (1), die auf beiden Seiten mit einer auf einer Trägerbahn (6, 7) aufgebrachten, IR-reflektierenden Metallbeschichtung (8, 9) versehen ist, die jeweils mit einer weitgehend IR-durchlässigen Schutzbeschichtung (10, 11) abgedeckt sind, dadurch gekennzeichnet, daß ein Trägernetz (2) vorgesehen ist, auf dessen beide Seiten je eine Trägerbahn (6, 7) mit außenseitiger Metall- und Schutzbeschichtung (8, 9 ; 10, 11) fixiert ist, wobei die Trägerbahnen (6, 7) sowie die Metall- und Schutzbeschichtungen (8, 9 ; 10, 11) für molekularen Wasserdampf im wesentlichen durchlässig ausgebildet sind.

2. Materialbahn nach Anspruch 1, dadurch gekennzeichnet, daß das Trägernetz (2) ein grobes Gewebe ist.

3. Materialbahn nach Anspruch 2, dadurch gekennzeichnet, daß das Trägernetz als Gittergewebe (2) ausgebildet ist.

4. Materialbahn nach Anspruch 1, dadurch gekennzeichnet, daß das Trägernetz als Gittergelege ausgebildet ist.

5. Materialbahn nach einem der Ansprüche 1 bis 4, dadurch gekennzeichnet, daß das Trägernetz (2) aus monofilen Fäden besteht, die an den Kreuzungspunkten (5) miteinander verklebt oder verschweißt sind.

6. Materialbahn nach einem der Ansprüche 1 bis 5, dadurch gekennzeichnet, daß die Trägerbahnen aus Papier bestehen.

7. Materialbahn nach einem der Ansprüche 1 bis 5, dadurch gekennzeichnet, daß die Trägerbahnen aus einem Textilgewebe bestehen.

8. Materialbahn nach einem der Ansprüche 1 bis 5, dadurch gekennzeichnet, daß die Trägerbahnen aus einem Faservlies (6, 7) bestehen.

9. Materialbahn nach einem der Ansprüche 1 bis 8, dadurch gekennzeichnet, daß die Trägerbahnen (6, 7) mit dem Trägernetz (2) verklebt sind.

10. Materialbahn nach einem der Ansprüche 1 bis 9, dadurch gekennzeichnet, daß eine Trägerbahn mit dem Trägernetz und der anderen Trägerbahn partiell verklebt ist.

11. Materialbahn nach einem der Ansprüche 1 bis 11, dadurch gekennzeichnet, daß die Trägerbahnen (6, 7) und das Trägernetz (2) aus schwer entflammbaren bzw. nicht brennbarem Material bestehen.

**Claims**

1. Infrared-reflecting flexible material web (1) provided at both sides with an infrared-reflecting metal coating (8, 9) which is applied to a supporting web (6, 7) and which in each case is covered with a protective coating (10, 11) which is largely infrared-pervious, characterised in that a supporting net (2) is provided, on each of the two sides of which there is fixed a supporting web (6, 7) with external metal and protective coatings (8, 9 ; 10, 11), the supporting webs (6, 7) and also the metal and protective coatings (8, 9 ; 10, 11) being constructed to be substantially pervious to molecular water vapour.

2. Web of material according to claim 1, characterised in that the supporting net (2) is a coarse fabric.

3. Web of material according to claim 2, characterised in that the supporting net is constructed as a lattice-type woven fabric.

4. Web of material according to claim 1, characterised in that the supporting net is constructed as a lattice-type laid fabric.

5. Web of material according to one of claims 1 to 4, characterised in that the supporting net (2) is made of monofilament threads which are welded or adhesively secured to one another at the points (5) of intersection.

6. Web of material according to one of claims 1 to 5, characterised in that the supporting webs are made of paper.

7. Web of material according to one of claims 1 to 5, characterised in that the supporting webs are made of a textile fabric.

8. Web of material according to one of claims 1 to 5, characterised in that the supporting webs are made of a fibre fleece (6, 7).

9. Web of material according to one of claims 1 to 8, characterised in that the supporting webs (6, 7) are adhesively secured to the supporting net (2).

10. Web of material according to one of claims 1 to 9, characterised in that one supporting web is partially adhesively secured to the other supporting web and to the supporting net.

11. Web of material according to one of claims 1 to 11, characterised in that the supporting webs (6, 7) and the supporting net (2) are made of difficultly flammable or non-combustible material.

Revendications

1. Nappe de tissu (1) souple, réfléchissant un rayonnement infrarouge, qui est munie, des deux côtés, de revêtements métalliques (8, 9) réfléchissant un rayonnement infrarouge, déposés sur une nappe-support (6, 7) et recouverts respectivement d'un revêtement de protection (10, 11) transparent, dans une grande mesure, à un rayonnement infrarouge, caractérisée en ce qu'il est prévu un filet-support (2), sur les deux côtés duquel sont fixées respectivement des nappes-supports (6, 7) ayant, du côté extérieur, un revêtement métallique (8, 9) et un revêtement de protection (10, 11), les nappes-supports (6, 7), ainsi que les revêtements métalliques et de protection (8, 9 ; 10, 11) étant essentiellement perméables à la vapeur d'eau moléculaire.

2. Nappe de tissu suivant la revendication 1, caractérisée en ce que le filet-support (2) est un tissu grossier.

3. Nappe de tissu suivant la revendication 2, caractérisée en ce que le filet-support est constitué en tissu lâche (2).

4. Nappe de tissu suivant la revendication 1, caractérisée en ce que le filet-support est constitué en voile lâche.

5. Nappe de tissu suivant l'une des revendications 1 à 4, caractérisée en ce que le filet-support (2) est constitué de fils monofilamentaires qui sont collés ou qui sont soudés les uns aux autres aux points de croisement (5).

6. Nappe de tissu suivant l'une des revendications 1 à 5, caractérisée en ce que les nappes-supports sont en papier.

7. Nappe de tissu suivant l'une des revendications 1 à 5, caractérisée en ce que les nappes-supports sont en un tissu en matière textile.

8. Nappe de tissu suivant l'une des revendications 1 à 5, caractérisée en ce que les nappes-supports sont en un non-tissé de fibres (6, 7).

9. Nappe de tissu suivant l'une des revendications 1 à 8, caractérisée en ce que les nappes-supports (6, 7) sont collées au filet-support (2).

10. Nappe de tissu suivant l'une des revendications 1 à 9, caractérisée en ce qu'une nappe-support est collée partiellement au filet-support et à l'autre nappe-support.

11. Nappe de tissu suivant l'une des revendications 1 à 10, caractérisée en ce que les nappes-supports (6, 7) et le filet-support (2) sont en une matière difficilement inflammable ou non combustible.

Fig. 1

Fig. 2